# EUROPEAN PATENT APPLICATION

(11) **EP 4 520 917 A1**
(43) Date of publication of application: **12.03.2025**
(21) Application number: 23772396.0
(22) Date of filing: 04.08.2023
(51) Int. Cl.: E21D 9/12, E21D 9/10

(54) **SLURRY-BASED ROCK MUCK DISCHARGE SYSTEM FOR VERTICAL EXCAVATION OPERATION**

(30) Priority: 17.07.2023 CN 202310875308
(71) Applicant: Jiangsu Ruicheng Machinery Co., Ltd., Xushe Town, Yixing City Wuxi, Jiangsu 214200 (CN)
(72) Inventor: TAN, Haiqiang, Wuxi, Jiangsu 214200 (CN)
(74) Representative: Schneiders & Behrendt Bochum
(86) International application number: PCT/CN2023/111123
(87) International publication number: WO 2025/015642

(57) **Abstract**

A muddy water slag discharging system for a vertical tunneling operation is provided, and relates to the technical field of slag discharging systems. The muddy water slag discharging system for a vertical tunneling operation includes a muddy water treatment unit, a mud supplying pump, a muddy water supplying pipe, a slag discharging pump and a slag discharging inlet pipe. The muddy water treatment unit includes a muddy water separation equipment, a filter pressing equipment, a mud preparation equipment and a mud mixing equipment which are in communication through pipelines in sequence. A mud inlet of the mud supplying pump communicates with a mud outlet of the mud mixing equipment. A mud inlet end of the muddy water supplying pipe communicates with a mud outlet of the mud supplying pump, and a mud outlet end of the muddy water supplying pipe is fixed on a tunneling head used in the vertical tunneling operation. The mud outlet end of the muddy water supplying pipe is close to a rotating cutter head in the tunneling head and located directly above the rotating cutter head. The rotating cutter head is provided with a slag suction port. The slag discharging pump is arranged on the tunneling head, and a mud outlet of the slag discharging pump communicates with a mud inlet of the muddy water separation equipment. The slag discharging inlet pipe is fixedly arranged on the tunneling head, and a mud outlet end of the slag discharging inlet pipe communicates with a mud inlet of the slag discharging pump. The slag discharging efficiency in the vertical tunneling operation is increased.

## Description

### TECHNICAL FIELD

The present disclosure relates to the technical field of slag discharging systems, in particular to a muddy water slag discharging system for a vertical tunneling operation.

### BACKGROUND

In the disposal of high-level radioactive waste, the final disposal method of burying high-level radioactive waste in a stable geological body with a depth range of 500 m to 1000 m is currently widely considered to be technically feasible in the world.

The disposal repository of high-level radioactive waste in the geological body usually includes a horizontal channel and a vertically downward disposal pit in the channel. The vertically downward disposal pit is formed by a vertical tunneling operation, that is a vertical tunneling head tunnels vertically downwards in a rock mass.

During the process of the vertical tunneling operation, the broken slag at the tunnel face generated by tunneling needs to be discharged. At present, the commonly used slag discharging method is vacuum slag discharge, that is, the broken slag at the tunnel face is sucked out by negative pressure. However, the speed of vacuum slag discharge is slow, and a slag suction port and a slag suction pipeline are easy to wear because of the collision of the broken slag with the slag suction port and the slag suction pipeline during the discharge process. If either the slag suction port or the slag suction pipeline is damaged, a vacuum slag discharging system cannot work normally, and then the vacuum slag discharging system needs to be maintained frequently during the vertical tunneling operation, affecting the efficiency of the vertical tunneling operation and causing a delay in the time limit.

Therefore, the traditional vacuum slag discharging system cannot meet the needs of the vertical tunneling operation with high efficiency.

### SUMMARY

The present disclosure aims to provide a muddy water slag discharging system for a vertical tunneling operation so as to solve the problems in the prior art and improve the slag discharging efficiency in the vertical tunneling operation.

In order to achieve the aim, the present disclosure provides the following scheme.

The present disclosure provides a muddy water slag discharging system for a vertical tunneling operation, including:
a muddy water treatment unit, the muddy water treatment unit includes a muddy water separation equipment, a filter pressing equipment, a mud preparation equipment and a mud mixing equipment which are in communication through pipelines in sequence;
a mud supplying pump, a mud inlet of the mud supplying pump communicates with a mud outlet of the mud mixing equipment;
a muddy water supplying pipe, a mud inlet end of the muddy water supplying pipe communicates with a mud outlet of the mud supplying pump, a mud outlet end of the muddy water supplying pipe is fixed on a tunneling head used in the vertical tunneling operation, and the mud outlet end of the muddy water supplying pipe is close to a rotating cutter head in the tunneling head and located directly above the rotating cutter head;
a slag discharging pump, the slag discharging pump is arranged on the tunneling head, and a mud outlet of the slag discharging pump communicates with a mud inlet of the muddy water separation equipment; and
a slag discharging inlet pipe, the slag discharging inlet pipe is fixedly arranged on the tunneling head, a mud outlet end of the slag discharging inlet pipe communicates with a mud inlet of the slag discharging pump, and a mud suction end of the slag discharging inlet pipe and the mud outlet end of the muddy water supplying pipe are both close to the rotating cutter head in the tunneling head and both located directly above the rotating cutter head.

Preferably, the muddy water slag discharging system for a vertical tunneling operation further includes a slag discharging relay pump. A mud inlet of the slag discharging relay pump communicates with the mud outlet of the slag discharging pump through a slag discharging outlet pipe. A mud outlet of the slag discharging relay pump communicates with the mud inlet of the muddy water separation equipment through a pipeline.

Preferably, the mud suction end of the slag discharging inlet pipe and the mud outlet end of the muddy water supplying pipe are both spaced from the rotating cutter head.

Preferably, the mud preparation equipment is configured for preparing muddy water. The mud mixing equipment is configured for further mixing the muddy water prepared by the mud preparation equipment. The muddy water separation equipment is configured for performing a solid-liquid separation of muddy water mixed with rock slag. The filter pressing equipment is configured for filter-pressing the muddy water after the solid-liquid separation.

Preferably, the muddy water separation unit and the slag discharging relay pump are both located outside a vertical well excavated by the vertical tunneling operation.

Preferably, positions of the slag discharging supplying pump and the muddy water separation unit are both fixed.

Compared with the prior art, the present disclosure has the following technical effects.

According to the muddy water slag discharging system for a vertical tunneling operation in the present disclosure, the slag discharging efficiency in the vertical tunneling operation is increased.

Specifically, the rock slag generated in the vertical tunneling operation is taken out of the tunnel face via the muddy water, so that the slag discharging speed is high, and the wear on a slag suction port, a pipeline system and the like is small. Moreover, since the rotating cutter head is soaked in the muddy water during the operation, the high heat of the rotating cutter head can be taken away by the muddy water, so that the rotating cutter head is cooled. Therefore, the cutting effect of the rotating cutter head is improved, and the service life of the rotating cutter head is prolonged, so that the efficiency of the vertical tunneling operation is increased.

### BRIEF DESCRIPTION OF THE DRAWINGS

To describe the technical scheme in the embodiments of the present disclosure or in the prior art more clearly, the following briefly introduces the accompanying drawings required for describing the embodiments. Apparently, the accompanying drawings in the following description show merely some embodiments of the present disclosure, and those skilled in the art may still derive other drawings from these accompanying drawings without creative efforts.
FIG. 1 is a structural schematic diagram of a muddy water slag discharging system for a vertical tunneling operation according to an embodiment of the present disclosure; and
FIG. 2 is a partial structural schematic diagram of a muddy water slag discharging system for a vertical tunneling operation according to an embodiment of the present disclosure.

Reference signs: 1, muddy water separation equipment; 2, filter pressing equipment; 3, mud preparation equipment; 4, mud mixing equipment; 5, mud supplying pipe; 6, tunneling head; 7, rotating cutter head; 8, slag discharging pump; 9, slag discharging inlet pipe; 10, slag discharging outlet pipe; 11, slag discharging relay pump; 12, rock mass; 13, mud supplying pump.

### DETAILED DESCRIPTION OF THE EMBODIMENTS

The following clearly and completely describes the technical scheme in the embodiments of the present disclosure with reference to the accompanying drawings in the embodiments of the present disclosure. Apparently, the described embodiments are merely a part rather than all of the embodiments of the present disclosure. Based on the embodiments in the present disclosure, all other embodiments obtained by those skilled in the art without creative efforts fall within the protection scope of the present disclosure.

The present disclosure aims to provide a muddy water slag discharging system for a vertical tunneling operation so as to solve the problems in the prior art and increase the slag discharging efficiency in the vertical tunneling operation.

To make the foregoing objective, features and advantages of the present disclosure clearer and more comprehensible, the present disclosure is further described in detail below with reference to the accompanying drawings and specific embodiments.

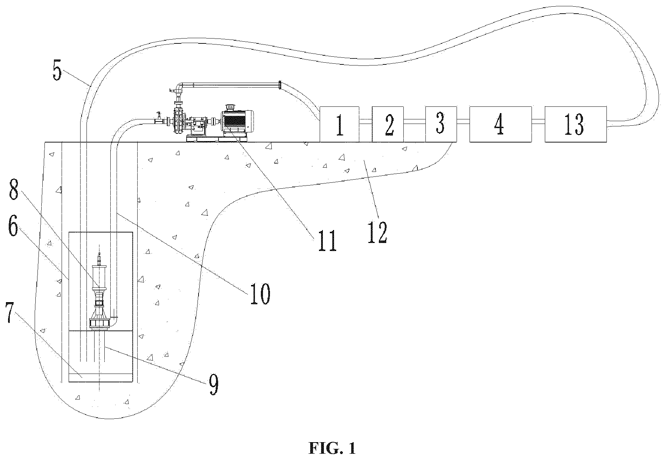

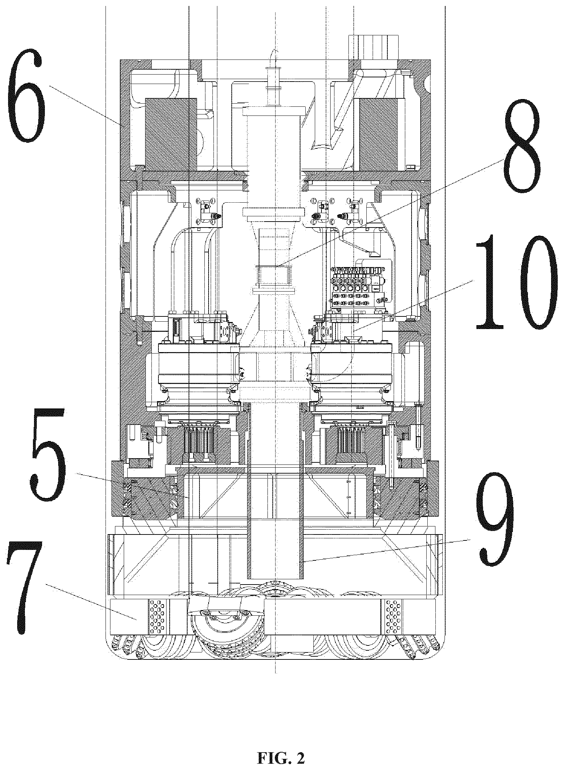

As shown in FIG. 1 and FIG. 2, the embodiment provides a muddy water slag discharging system for a vertical tunneling operation, including a muddy water treatment unit, a muddy water supplying pipe 5, a slag discharging pump 8, a slag discharging inlet pipe 9, a slag discharging outlet pipe 10 and a slag discharging relay pump 11.

The muddy water treatment unit includes a muddy water separation equipment 1, a filter pressing equipment 2, a mud preparation equipment 3 and a mud mixing equipment 4 which are in communication through pipelines in sequence. The mud preparation equipment 3 is configured for preparing muddy water. The muddy water prepared by the mud preparation equipment 3 can be further mixed by the mud mixing equipment 4. The muddy water separation equipment 1 is configured for performing a solid-liquid separation of muddy water mixed with rock slag. The filter pressing equipment 2 is configured for filter-pressing the muddy water after the solid-liquid separation.

A mud inlet of the mud supplying pump 13 communicates with a mud outlet of the mud mixing equipment 4. A mud inlet end of the muddy water supplying pipe 5 communicates with a mud outlet of the mud supplying pump 13, and a mud outlet end of the muddy water supplying pipe 5 is fixed on a tunneling head 6 used in the vertical tunneling operation. The mud outlet end of the muddy water supplying pipe 5 is close to a rotating cutter head 7 in the tunneling head 6 and located directly above the rotating cutter head 7. The tunneling head 6 and the rotating cutter head 7 are both related to the prior art.

It should be noted that the muddy water separation equipment 1, the filter pressing equipment 2, the mud preparation equipment 3, the mud mixing equipment 4, the tunneling head 6 and the rotating cutter head 7 are all related to the prior art, so the respective structures and working principles of the muddy water separation equipment 1, the filter pressing equipment 2, the mud preparation equipment 3, the mud mixing equipment 4, the tunneling head 6 and the rotating cutter head 7 are not described in detail in the embodiment. In addition, since the structures of the heading head 6 and the rotating cutter head 7 are complex, the heading head 6 and the rotating cutter head 7 are schematically illustrated in a simplified manner in FIG. 1 in order to ensure the clarity of FIG. 1.

The slag discharging pump 8 is arranged on the tunneling head 6, and a mud outlet of the slag discharging pump 8 communicates with a mud inlet of the muddy water separation equipment 1. The slag discharging inlet pipe 9 is fixedly arranged on the tunneling head 6, a mud outlet end of the slag discharging inlet pipe 9 communicates with a mud inlet of the slag discharging pump 8, and a mud suction end of the slag discharging inlet pipe 9 and the mud outlet end of the muddy water supplying pipe 5 are both close to the rotating cutter head 7 in the tunneling head 6 and both located directly above the rotating cutter head 7. The mud suction end of the mud discharging inlet pipe 9 and the mud outlet end of the muddy water supplying pipe 5 are both spaced from the rotating cutter head 7.

A mud inlet of the slag discharging relay pump 11 communicates with the mud outlet of the slag discharging pump 8 through a slag discharging outlet pipe 10. A mud outlet of the slag discharging relay pump 11 communicates with the mud inlet of the muddy water separation equipment 1 through a pipeline.

The muddy water separation unit and the slag discharging relay pump 11 are both located outside the vertical well excavated by the vertical tunneling operation, and may be fixedly arranged on the ground or in a horizontal channel of the disposal repository.

The specific working principle of the muddy water slag discharging system for a vertical tunneling operation in the embodiment is as follows.

At the same time of vertical tunneling in a rock mass 12 by the tunneling head 6, the muddy water is pressed into a tunnel face of vertical tunneling operation by the muddy water slag discharging system for a vertical tunneling operation in the embodiment. The muddy water is mixed with rock slag cut by the rotating cutter head 7 and stirred to form high-concentration muddy water. It should be noted that the rotating cutter head 7 in the prior art is usually hollowed-out, that is to say, many gaps are formed in the rotating cutter head 7. Therefore, the muddy water flowing out of the muddy water supplying pipe 5 can reach the tunnel face through the rotating cutter head 7, and mix with the broken slag on the tunnel face, then the muddy water carrying the broken slag passes through the rotating cutter head 7, and enters the slag discharging inlet pipe 9. The high-concentration muddy water is pumped to the muddy water treatment unit by the slag discharging pump 8 and the slag discharging relay pump 11, and is subjected to the solid-liquid separation by a muddy water separation pump. The muddy water after the solid-liquid separation is subjected to filter pressing by the filter pressing equipment 2. The filter-pressed muddy water is prepared by the mud preparation equipment 3 and mixed by the mud mixing equipment 4, and then pumped back to the tunnel face for recycling under the action of the supplying pump 13.

According to the muddy water slag discharging system for a vertical tunneling operation in the embodiment, the rock slag generated in the vertical tunneling operation is taken out of the tunnel face via the muddy water, so that the slag discharging speed is high, and the wear on a slag suction port, a pipeline system and the like is small. Moreover, since the rotating cutter head 7 is soaked in the muddy water during the operation, the high heat of the rotating cutter head 7 can be taken away by the muddy water, so that the rotating cutter head 7 is cooled. Therefore, the cutting effect of the rotating cutter head 7 is improved, and the service life of the rotating cutter head 7 is prolonged, so that the efficiency of the vertical tunneling operation is increased.

Specific examples are for illustration of the principles and implementation methods of the present disclosure. The description of the above-mentioned embodiments is merely used to help understand the method and its core principles of the present disclosure. In addition, those skilled in the art can make various modifications in terms of specific embodiments and scope of application in accordance with the teachings of the present disclosure. In conclusion, the contents of this specification should not be understood as the limitation of the present disclosure.

## Claims

1. A muddy water slag discharging system for a vertical tunneling operation, wherein the muddy water slag discharging system for a vertical tunneling operation comprises:
a muddy water treatment unit, the muddy water treatment unit comprises a muddy water separation equipment, a filter pressing equipment, a mud preparation equipment and a mud mixing equipment which are in communication through pipelines in sequence;
a mud supplying pump, a mud inlet of the mud supplying pump communicates with a mud outlet of the mud mixing equipment;
a muddy water supplying pipe, a mud inlet end of the muddy water supplying pipe communicates with a mud outlet of the mud supplying pump, a mud outlet end of the muddy water supplying pipe is fixed on a tunneling head used in the vertical tunneling operation, and the mud outlet end of the muddy water supplying pipe is close to a rotating cutter head in the tunneling head and located directly above the rotating cutter head;
a slag discharging pump, the slag discharging pump is arranged on the tunneling head, and a mud outlet of the slag discharging pump communicates with a mud inlet of the muddy water separation equipment; and
a slag discharging inlet pipe, the slag discharging inlet pipe is fixedly arranged on the tunneling head, a mud outlet end of the slag discharging inlet pipe communicates with a mud inlet of the slag discharging pump, and a mud suction end of the slag discharging inlet pipe and the mud outlet end of the muddy water supplying pipe are both close to the rotating cutter head in the tunneling head and both located directly above the rotating cutter head.

2. The muddy water slag discharging system for a vertical tunneling operation according to claim 1, further comprising a slag discharging relay pump, wherein a mud inlet of the slag discharging relay pump communicates with the mud outlet of the slag discharging pump through a slag discharging outlet pipe; and a mud outlet of the slag discharging relay pump communicates with the mud inlet of the muddy water separation equipment through a pipeline.

3. The muddy water slag discharging system for a vertical tunneling operation according to claim 1, wherein the mud suction end of the slag discharging inlet pipe and the mud outlet end of the muddy water supplying pipe are both spaced from the rotating cutter head.

4. The muddy water slag discharging system for a vertical tunneling operation according to claim 1, wherein the mud preparation equipment is configured for preparing muddy water; the mud mixing equipment is configured for further mixing the muddy water prepared by the mud preparation equipment; the muddy water separation equipment is configured for performing a solid-liquid separation of muddy water mixed with rock slag; and the filter pressing equipment is configured for filter-pressing the muddy water after the solid-liquid separation.

5. The muddy water slag discharging system for a vertical tunneling operation according to claim 2, wherein the muddy water separation unit and the slag discharging relay pump are both located outside a vertical well excavated by the vertical tunneling operation.

6. The muddy water slag discharging system for a vertical tunneling operation according to claim 2, wherein positions of the slag discharging supplying pump and the muddy water separation unit are both fixed.
